# EUROPÄISCHE PATENTSCHRIFT

(11) **EP 1 203 750 B1**
(45) Veröffentlichungstag und Bekanntmachung des Hinweises auf die Patenterteilung: **05.10.2005**
(21) Anmeldenummer: 01125711.0
(22) Anmeldetag: 27.10.2001
(51) Int. Cl.: C01B 3/32, B01J 19/26, B01J 8/02, B01J 8/00, H01M 8/04

(54) **Verfahren und Vorrichtung zum Starten eines Reaktors in einem Gaserzeugungssystem**
Process and apparatus for starting a reactor in a gas generation system
Procédé et dispositif de démarrage d'un réacteur dans un système de génération de gaz

(30) Priorität: 04.11.2000 DE 10054840
(43) Veröffentlichungstag der Anmeldung: 08.05.2002
(73) Patentinhaber: Ballard Power Systems AG, 73230 Kirchheim / Teck-Nabern (DE)
(72) Erfinder: Boneberg, Stefan, 72660 Beuren (DE); Döling, Fabian, 73765 Neuhausen a.d. F. (DE); Griesmeier, Uwe, 88677 Markdorf (DE)
(74) Vertreter: Beyer, Andreas

(56) Entgegenhaltungen:
- EP-A- 0 254 395
- EP-A- 0 936 182
- EP-A- 1 198 020
- WO-A-99/31012

## Beschreibung

Die Erfindung betrifft ein Verfahren zum Starten eines Reaktors in einem Gaserzeugungssystem einer Brennstoffzellenanlage nach der im Oberbegriff von Anspruch 1 näher definierten Art.

Außerdem betrifft die Erfindung eine Vorrichtung zum Starten eines Reaktors in einem Gaserzeugungssystem einer Brennstoffzellenanlage nach der im Oberbegriff von Anspruch 10 näher definierten Art.

Aus der DE 33 45 958 A1 ist ein rasch startendes Methanol-Reaktorsystem bekannt. Dabei wird ein katalytischer Crackreaktor während des Ingangsetzens sowohl indirekt als auch direkt erhitzt, um ein rasch startendes System zu erhalten. Zu diesem Zweck wird während des Ingangsetzens der reformierbare Brennstoff, wie beispielsweise Methanol, zuerst mit Luft in einem Verbrenner verbrannt. Die Verbrennungsabgase werden dann durch eine Verbrennungsgaskammer geschickt, die in Wärmeaustauschbeziehung mit dem katalytischen Crackreaktor steht, um den Wärmeinhalt der Verbrennungsabgase auf den Reaktor zu übertragen und die Temperatur des Katalysators zu erhöhen. Danach wird der Abgasstrom der Verbrennung direkt durch das katalytische Bett geleitet, um die katalytisch aktiven Bereiche direkt zu erhitzen und sie besonders schnell auf die erforderliche Temperatur zu bringen. Dabei wird die Maximaltemperatur des Gasstroms durch Wasserinjektion oder Wasserabschreckung so kontrolliert, dass eine Beschädigung des Katalysators durch Überhitzen vermieden wird.

Aus der US 4,820,594 ist ein Startverfahren für ein Gaserzeugungssystem in einer Brennstoffzellenanlage bekannt. Durch den in der Anlage verwendeten Brennstoff wird in der Startphase des Gaserzeugungssystems die für das Gaserzeugungssystem erforderliche thermische Energie durch eine direkte Verbrennung dieses Brennstoffs im Bereich zumindest einzelner Komponenten des Gaserzeugungssystems erreicht. Dazu wird der Brennstoff, welcher durch das Gaserzeugungssystem in dem weiteren Betrieb der Anlage in das wasserstoffhaltige Gas für die Brennstoffzelle reformiert wird, für die Verbrennung zum schnellen Aufheizen des Gaserzeugungssystems genutzt.

Die WO 99/31012 A1 offenbart ein Verfahren zum Betrieb einer Anlage zur Wasserdampfreformierung eines Kohlenwasserstoffs, bei dem bei einem Kaltstart der Anlage eine erste Betriebsphase aktiviert wird. In dieser ersten Betriebsphase wird eine eingangsseitige Mehrfunktions-Reaktoreinheit eines Reformierungsreaktors als katalytische Brennereinheit betrieben, wozu ihr flüssiges Methanol oder, falls vorhanden, zwischengespeicherter Wasserstoff als Brennstoff und zudem ein sauerstoffhaltiges Gas, z.B. Luft, zugeführt wird. Ein ausgangsseitiger Reaktortell wird über Wärmeleitung sowie durch heißes, bei der katalytischen Verbrennung in der eingangsseitigen Mehrfunktions-Reaktoreinheit entstehendes Verbrennungsabgas aufgeheizt. Um die Aufheizung der Mehrfunktions-Reaktoreinheit und damit auch des ausgangsseitigen Reaktorteils zu beschleunigen, wird die der Mehrfunktions-Reaktoreinheit zugeführte Brennstoffmenge kontinuierlich mit steigender Temperatur der Mehrfunktions-Reaktoreinheit so erhöht, dass in dem Produktgas kein merklicher Anteil an unverbranntem Brennstoff enthalten ist. Dadurch kann das mit steigender Temperatur zunehmende katalytische Verbrennungsvermögen der Mehrfunktions-Reaktoreinheit optimal genutzt werden.

Die EP 0 936 182 A2 beschreibt ein Verfahren zum Starten eines autothermen Reformers, bei dem der Reformer durch ein heißes, wasserstoffhaltiges Gas aufgeheizt wird, das durch katalytische Umsetzung von Methanol und Wasserdampf in einem dem Reformer vorgeschalteten Reaktor erzeugt wird. Bei einem Druckabfall in dem Reaktor wird ein Bypassventil geöffnet, wodurch die Zufuhr eines in dem Reformer umzusetzenden Edukts zu dem Reformer ermöglicht und das System graduell in den Normalbetrieb überführt wird.

Die EP 0 254 395 A2 betrifft ein Verfahren und eine Vorrichtung zur Erzeugung eines wasserstoffhaltigen Gasstroms. Die Vorrichtung umfasst einen ersten, mit einem selbstzündenden Brenner ausgestatteten katalytischen Reaktor sowie einen dem ersten Reaktor vorgeschalteten zweiten katalytischen Reaktor. Während einer Startphase des Systems wird dem zweiten Reaktor Luft und Erdgas zugeführt, wobei durch die katalytische Reaktion in dem zweiten Reaktor erzeugtes heißes Abgas einem Einlass des dem ersten Reaktor zugeordneten selbstzündenden Brenners zugeleitet wird. Zusätzlich dazu wird dem Einlass des Brenners über eine Bypassleitung Erdgas zugeführt, wobei der Volumenstrom des über die Bypassleitung zugeführten Erdgases so gewählt wird, dass in dem Brenner eine stabile Flamme entsteht, wenn dem Brenner nach Erreichen der Selbstzündungstemperatur Luft zugeführt wird.

Die nachveröffentlichte, nur hinsichtlich der Neuheit der vorliegenden Erfindung relevante EP 1 198 020 A2 offenbart ein Brennstoffzellensystem mit einem Reformer sowie einer dem Reformer vorgeschalteten Verbrennungseinrichtung. Während einer Startphase des Systems wird der Verbrennungseinrichtung ein Brennstoff sowie Luft zugeführt, wobei die von der Verbrennungseinrichtung erzeugten Abgase zum Aufheizen des Reformers genutzt werden.

Durch das Erhitzen des Reaktors bzw. Reformers gemäß dem oben beschriebenen Stand der Technik vor dessen eigentlicher Inbetriebsetzung kommt es zu Nachteilen dadurch, dass beim Einbringen der Edukte in den Verdampfer ein schlagartiges Verdampfen der Edukte zumindest in Teilbereichen auftritt. Dies führt zu nicht unerheblichen Druckspannungen in dem Reformer sowie zu sehr hohen Materialspannungen aufgrund der starken Temperaturgradienten in einzelnen Teilen des Reformers.

Als weiterer Nachteil muss auch angesehen werden, dass durch die stellenweise schlagartige Verdampfung und die damit verbundene starke Abkühlung des Reformers in einzelnen Bereichen eine sehr schlechte und inhomogene Verteilung der Temperatur und damit auch eine entsprechend schlechte Verteilung der Edukte in dem Reformer auftritt. Insbesondere bei einer katalytischen Umsetzung der Edukte kommt es damit zu einer Verschlechterung dieser Umsetzung in dem Reformer.

Es ist daher Aufgabe der Erfindung, ein Verfahren zum Starten eines Reaktors in einem Gaserzeugungssystem zu schaffen, welches im Falle eines Kaltstarts sehr schnell in der Lage ist, den Reaktor zu erhitzen und mit einer sehr gleichmäßigen Verteilung und einer zumindest teilweise erfolgenden sehr gleichmäßigen Verdampfung der in dem Reaktor umzusetzenden Edukte ein sehr schnelles Anfahren des Gaserzeugungssystems zu ermöglichen.

Erfindungsgemäß wird diese Aufgabe durch ein Verfahren mit den im Anspruch 1 genannten Merkmalen gelöst.

Außerdem wird die Aufgabe erfindungsgemäß durch eine Vorrichtung mit den Merkmalen des Anspruchs 10 gelöst.

Das erfindungsgemäße Verfahren und/oder die erfindungsgemäße Vorrichtung ermöglichen es, einen Reaktor in einem Gaserzeugungssystem in einem Kaltstartfall sehr schnell zu starten und eine sehr gleichmäßige Verteilung und Verdampfung der umzusetzenden, beispielsweise zu reformierenden Edukte, oder zumindest einen Teil der zu reformierenden Edukte, zu realisieren, ehe diese den eigentlichen Reaktor erreichen.

Durch die Möglichkeit zumindest eines der Edukte, z.B. für die Reformierung, bei zunehmend steigender Temperatur des von zumindest einem Teil des Abgasstroms durchströmten Reaktors kontinuierlich zu erhöhen, läßt sich in besonders vorteilhafter Weise eine Regelung der Temperatur für den Reaktor, und damit die Gefahr eines Überhitzens, eines beispielsweise in dem Reaktor befindlichen Katalysators oder dergleichen, weitgehend vermeiden. Zusätzlich können die Edukte, welche in den heißen Abgasstrom eingebracht werden, in diesem sehr gut verteilt und zumindest teilweise bereits verdampft werden, ehe sie den eigentlichen Reaktor erreichen. Damit läßt sich ein sehr schnelles Anfahren des Reaktors durch eine sehr gleichmäßige und homogene Beschickung mit bereits verdampftem bzw. erhitztem Edukt erreichen.

Für den speziellen Anwendungsfall der Gaserzeugungsanlage für eine Brennstoffzelle, insbesondere im mobilen Bereich, bedeutet dies, daß im Kaltstartfall sehr schnell angefahren werden kann und sehr schnell Wasserstoffgas zum Betrieb der Brennstoffzelle zur Verfügung gestellt wird.

Als in den heißen Abgasstrom einzudosierendes Edukt kommen selbstverständlich alle zur Reformierung geeigneten Kohlenwasserstoffe zum Einsatz, wobei es hier auch denkbar wäre, die Anlage mit einem Premix, beispielsweise aus Methanol und Wasser, zu betreiben.

Der Kraftstoff zur Erzeugung der thermischen Energie kann beispielsweise der ohnehin zur Reformierung zur Verfügung stehende Kraftstoff sein, es ist jedoch auch der Einsatz eines entsprechenden zusätzlichen Kraftstoffs, wie beispielsweise Erdgas, Naphta, Dimethyläther, Benzin, Flüssiggas oder dergleichen, denkbar. Dabei ergeben sich entscheidende Vorteile während der Startphase des Gaserzeugungssystems. Die entsprechenden verwendbaren Kraftstoffe können beispielsweise eine leichtere Verdampfbarkeit aufweisen und erlauben damit, das Gaserzeugungssystem bei einer bedeutend niedrigeren Aktivierungsenergie zu starten. Außerdem können derartige Kraftstoffe über eine entsprechende thermische oder katalytische Konvertierung annähernd rückstandsfrei umgesetzt werden. Dadurch und auch aufgrund der schnellen Aufheizung ist das Gaserzeugungssystem mit einer entsprechend niedrigen Startemission zu betreiben.

Weitere vorteilhafte Ausgestaltungen der Erfindung ergeben sich aus den restlichen Unteransprüchen und aus dem anhand der Zeichnung nachfolgend prinzipmäßig dargestellten Ausführungsbeispiel.

Es zeigt:
- Fig. 1: einen prinzipmäßig angedeuteten Aufbau des Gaserzeugungssystems mit Komponenten zur Durchführung des Startverfahrens; und
- Fig. 2: den prinzipmäßigen Aufbau eines in das Zuleitungsrohr eines Reformers integrierten Brenners.

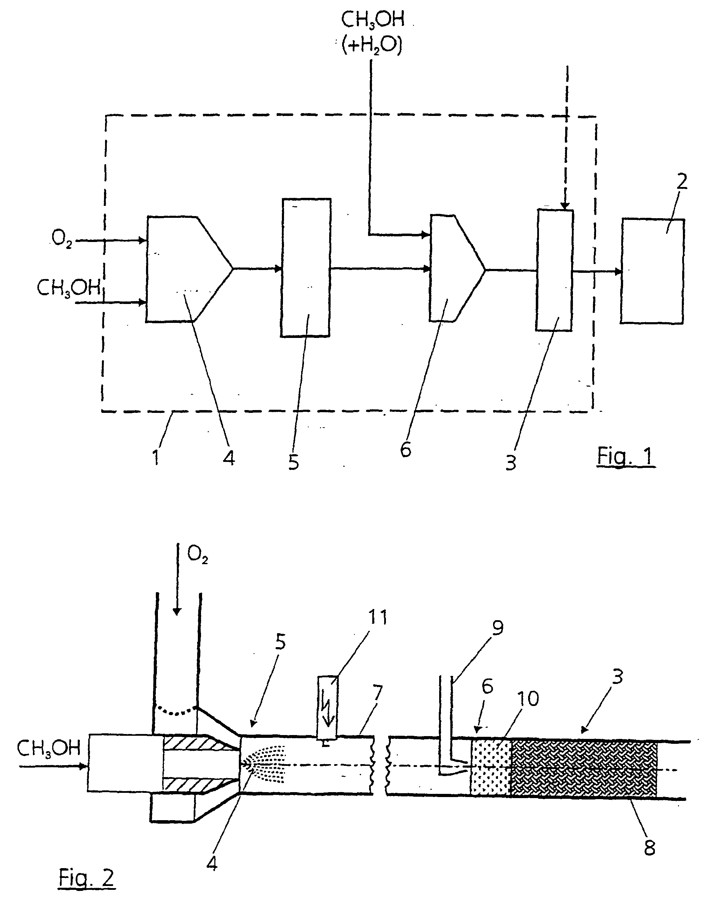

In Fig. 1 ist ein Gaserzeugungssystem 1 zur Versorgung einer Brennstoffzelle 2 mit wasserstoffhaltigem Gas stark schematisiert angedeutet. Die eigentliche Erzeugung des wasserstoffhaltigen Gases aus einem beispielsweise flüssigen Kohlenwasserstoff, z.B. Methanol (CH₃OH), erfolgt dabei in einem Reaktor 3, welcher als autothermer Reformer, als partielle Oxidationsstufe, als Kombination daraus oder als dazu vergleichbarer Aufbau ausgebildet sein kann.

Es ist allgemein bekannt, daß derartige Reaktoren 3 eine bestimmte Betriebstemperatur benötigen, um die zugeführten Edukte umzusetzen. Bei diesen Edukten handelt es sich im dargestellten Beispiel um einen Kohlenwasserstoff, beispielsweise das bereits erwähnte Methanol CH₃OH sowie Wasser, welche in dem Reaktor 3 zu einem großen Teil in Wasserstoff und Kohlendioxid umgesetzt werden. Diese Gase gelangen dann in die Brennstoffzelle 2, in welcher der Wasserstoff in bekannter Weise zur Erzeugung von elektrischer Energie genutzt wird.

Zum Aufheizen eines derartigen Reaktors 3 in dem Gaserzeugungssystem 1 im Falle eines Kaltstarts, also wenn der Reaktor 3 eine Temperatur aufweist, welche weit unterhalb der Betriebstemperatur des Gaserzeugungssystems 1 liegt, wird nun ein Kohlenwasserstoff umgesetzt bzw. verbrannt, um die thermische Energie zum Kaltstart des Reaktors 3 in dem Gaserzeugungssystem 1 zu liefern.

In dem in Fig. 1 dargestellten Ausführungsbeispiel wird dazu Methanol (CH₃OH) und ein sauerstoffhaltiges Gas (O₂), in besonders einfacher Weise bietet sich hier Luft an, in einem Mischbereich 4 vermischt und einem Brenner 5 zugeführt. Der Brenner 5 kann als herkömmlicher Flammbrenner oder auch als katalytischer Brenner ausgebildet sein. Die Abgase des Brenners 5 gelangen über einen weiteren Mischbereich 6, auf welchen später noch näher eingegangen wird, in den Reaktor 3 und heizen mit ihrem thermischen Energieinhalt diesen Reaktor 3 auf.

In der Startphase des Gaserzeugungssytems 1 wird nun möglichst schnell möglichst viel heißes Abgas in den Reaktor 3 eingeleitet, um diesen möglichst schnell auf Betriebstemperatur aufzuheizen. Gleichzeitig muß jedoch die Temperatur in der Art überwacht werden, daß der üblicherweise im Reaktor 3 vorliegende Katalysator nicht durch Überhitzung geschädigt wird.

Bei der Verbrennung in dem Brenner 5 liegen üblicherweise Temperaturen von mehr als 1000° C vor. Deshalb wird in dem weiteren Mischbereich 6 eines der zu reformierenden Edukte für den Reaktor 3 in den heißen Abgasstrom des Brenners 5 eingebracht. Bei diesem Edukt handelt es sich dabei insbesondere um den zu reformierenden Kohlenwasserstoff, hier also das Methanol. Grundlegend ist es jedoch auch denkbar, an dieser Stelle über den Mischbereich 6 einen Premix aus Methanol und Wasser (H₂O) in den heißen Abgasstrom des Brenners 5 einzubringen.

In dem Mischbereich 6 ist, wie in besonders günstiger Ausführungsform auch in dem Mischbereich 4, jeweils ein statischer Mischer angeordnet, welcher durch Druckverluste, Turbulenzen und dergleichen dafür sorgt, daß die eingebrachten Stoffe gut miteinander vermischt werden. Insbesondere im Mischbereich 6 werden hier die flüssig eingebrachten Edukte mit dem heißen Abgasstrom vermischt und sollen in diesem gleichmäßig verteilt und zumindest teilweise verdampft werden.

Damit kann sichergestellt werden, daß die zu reformierenden Edukte dem Reaktor 3 in einer zumindest teilweise verdampften, sehr gleichmäßigen Verteilung zusammen mit dem heißen Abgas zugeführt werden, so daß die Reformierung der Edukte sehr schnell, einfach und bezüglich der Startemissionen sehr sauber starten kann.

Außerdem kann durch Zufuhr der Edukte die Temperatur in dem Reaktor 3 bzw. in dem in den Reaktor 3 einströmenden Gasstrom so geregelt werden, daß es zu keiner Überhitzung des Reaktors 3 kommt.

Dies bedeutet, daß nach der Startphase mit steigender Temperatur in dem Reaktor 3 der Volumenstrom der eingebrachten Edukte im Mischbereich 6 kontinuierlich erhöht wird, um die Erzeugung des wasserstoffhaltigen Gases sehr schnell und sehr gleichmäßig anfahren zu können.

Bezüglich des Aufwands der Bevorratung von Kohlenwasserstoffen ist der in Fig. 1 dargestellte Betriebsfall natürlich sehr günstig, da hier lediglich ein Kohlenwasserstoff (Methanol) verwendet wird. Grundlegend ist es jedoch auch denkbar, zum Betrieb des Brenners 5 einen anderen Kohlenwasserstoff zu verwenden als der zur Reformierung im Mischbereich 6-zugesetzte Kohlenwasserstoff.

Grundlegend gibt es nun mehrere Möglichkeiten, dieses Kaltstartverfahren für den Reaktor 3 in dem Gaserzeugungssystem 1 zu betreiben, wobei der im Bereich des Mischbereichs 6 zugeführte Kohlenwasserstoff entweder zur weiteren Aufheizung des nachfolgenden Reaktors 3 verwendet wird, dies bedeutet, daß hier praktisch eine vollständige Oxidation des dem Mischbereich 6 zugeführten Kohlenwasserstoffs im Bereich des Reaktors erfolgt, oder daß er zum standardmäßigen Betrieb des Reaktors, also zur Wasserstofferzeugung durch autotherme Reformierung, verwendet wird.

Grundlegend läßt sich der Brenner 5, welcher entweder als Flammbrenner oder als katalytischer Brenner aufgebaut ist, dabei mit verschiedenen Einstellungen des Luft-Lambdas bzw. Brenner-Lambdas betreiben. Handelt es sich bei dem Reaktor 3 beispielsweise um einen sauerstoffempfindlichen Reaktor, so erfolgt der Start des Gaserzeugungssytems 1 mit einem Lambda des Brenners 5, welches kleiner als eins (λ < 1), vorzugsweise in der Größenordnung zwischen 0,5 und 1, liegt. Sobald der dem Brenner 5 nachgeschaltete Reaktor 3 die Betriebstemperatur erreicht hat, wird das Brenner-Lambda vergrößer und auf einen Wert von λ > 1 gefahren. Die Zufuhr des Kraftstoffs in den Mischbereich 6 wird entsprechend erhöht, wobei jetzt auch Kraftstoff in dem Brenner 5 oder in dem Mischbereich 4 selbst verdampft werden kann. Durch den Start bei einem entsprechenden Lambdawert λ < 1 werden also reduzierende Bedingungen im Abgas des Brenners 5 eingestellt, so daß ein in dem Reaktor 3 vorliegender Katalysator nicht oxidiert werden kann.

Wird dagegen ein Reaktor 3 eingesetzt, welcher prinzipiell sauerstoffunempfindlich reagiert, welcher also keinen Katalysator oder dergleichen erhält, der bei entsprechendem Luftüberschuß oxidiert wird, kann sowohl mit einem Lambdawert von λ < 1 oder auch mit einem Lambdawert von λ > 1 oder λ >> 1 gestartet werden. Dadurch kann wiederum Einfluß auf die Abgasqualität genommen werden, da bekanntermaßen bei einem mit entsprechendem Luftüberschuß betriebenen Flammbrenner 5 die Entstehung von Kohlenmonoxid reduziert wird.

Fig. 2 zeigt einen möglichen Aufbau der Kombination aus Brenner 5, Mischbereich 6 und Reaktor 3, bei dem die entsprechenden Elemente in ein Zuleitungsrohr 7 des Reaktors 3 mit einem Katalysator 8 integriert sind. Die Zufuhr der Edukte erfolgt hier teilweise über eine Rohrleitung 9, welche in dem Mischbereich 6 in Strömungsrichtung der heißen Abgase kurz vor einem statischen Mischer 10 angeordnet ist. In dem Zuleitungsrohr 7 ist in Strömungsrichtung davor der Brenner 5, hier als Flammbrenner 5, angeordnet, in welchem ein Kraftstoff-Luft-Gemisch über eine Zündeinrichtung 11, hier beispielsweise eine Zündkerze, gezündet werden kann.

Der Aufbau ermöglicht es durch die Integration der Elemente in die Zuleitung 7 eine sehr platzsparende Einheit aus Brenner 5 und Reaktor 3 mit den entsprechenden Mischbereichen 4 und 6 zu konzipieren, was wiederum sehr günstige Auswirkungen auf den Platzbedarf des gesamten Gaserzeugungssystems 1 bzw. der gesamten Brennstoffzellenanlage hat.

## Patentansprüche

1. Verfahren zum Starten eines Reaktors (3), insbesondere eines Reformers, in einem Gaserzeugungssystem (1) einer Brennstoffzellenanlage bei einer Temperatur, weiche weit unterhalb der Betriebstemperatur des Gaserzeugungssystems (1) liegt, wobei ein Kohlenwasserstoff zur Erzeugung von thermischer Energie zum Aufheizen des Reaktors umgesetzt wird, und wobei zumindest ein Teil eines Abgasstroms des umgesetzten Kohlenwasserstoffs in den Reaktor (3) einströmt,
**dadurch gekennzeichnet, dass** in den zumindest einen Teil des Abgasstroms, welcher in den Reaktor (3) einströmt, in der Startphase des Gaserzeugungssystems (1) mit steigender Reaktortemperatur ein zunehmender Volumenstrom wenigstens eines in dem Reaktor (3) umzusetzenden Edukts (CH₃OH) eingebracht und zumindest teilweise verdampft wird.

2. Verfahren nach Anspruch 1,
**dadurch gekennzeichnet, dass** der Teil des Abgasstroms und das wenigstens eine Edukt (CH₃OH) in einen autothermen Reformer als zumindest einen Teil des Reaktors (3) eingebracht werden.

3. Verfahren nach Anspruch 1 oder 2,
**dadurch gekennzeichnet, dass** der Teil des Abgasstroms und das wenigstens eine Edukt in eine partielle Oxidationsstufe als zumindest einen Teil des Reaktors (3) eingebracht werden.

4. Verfahren nach Anspruch 1, 2 oder 3,
**dadurch gekennzeichnet, dass** der Kohlenwasserstoff (CH₃OH) zumindest teilweise in einem Flammbrenner (5) verbrannt wird.

5. Verfahren nach einem der Ansprüche 1 bis 4,
**dadurch gekennzeichnet, dass** der Kohlenwasserstoff (CH₃OH) zumindest teilweise in einer katalytischen Reaktion umgesetzt wird.

6. Verfahren nach einem der Ansprüche 1 bis 5,
**dadurch gekennzeichnet, dass** als zumindest ein Volumenanteil des wenigstens einen Edukts (CH₃OH) derselbe Kohlenwasserstoff (CH₃OH) wie bei der Umsetzung verwendet wird.

7. Verfahren nach einem der Ansprüche 1 bis 6,
**dadurch gekennzeichnet, dass** als zumindest ein Volumenanteil des wenigstens einen Edukts Wasser (H₂O) verwendet wird.

8. Verfahren nach einem der Ansprüche 1 bis 7,
**dadurch gekennzeichnet, dass** nach Erreichen der Betriebstemperatur des Reaktors (3) die Verbrennung mit einem Lambdawert des Brenners (5) erfolgt, welcher größer als eins ist.

9. Verfahren nach einem der Ansprüche 1 bis 8,
**dadurch gekennzeichnet, dass** im Falle eines gegen Sauerstoff empfindlichen Reaktors (3) die Umsetzung mit einem Lambdawert des Brenners (5), welcher kleiner als eins ist startet.

10. Vorrichtung zum Starten eines Reaktors (3), insbesondere eines Reformers, in einem Gaserzeugungssystem (1) einer Brennstoffzellenanlage bei einer Temperatur, welche weit unterhalb der Betriebstemperatur des Gaserzeugungssystems (1) liegt, mit wenigstens einem Brenner (5), welcher in Strömungsrichtung seiner Abgase vor dem Reaktor (3) angeordnet ist, wobei in Strömungsrichtung vor dem Brenner (5) ein Mischbereich (4) für ein sauerstoffhaltiges Gas und einen Brennstoff angeordnet ist,
**dadurch gekennzeichnet, dass** in Strömungsrichtung nach dem Brenner (5) und vor dem Reaktor (3) wenigstens ein weiterer Mischbereich (6) für die Abgase des Brenners (5) und wenigstens ein in dem Reaktor (3) umzusetzendes Edukt (CH₃OH) angeordnet ist, wobei der Brenner (5) und der weitere Mischbereich (6) in ein Zuleitungsrohr (7) des Reaktors (3) integriert sind, und wobei das Gaserzeugungssystem (1) eine Vorrichtung (9) umfasst, die dazu eingerichtet ist, dem weiteren Mischbereich (6) in der Startphase des Gaserzeugungssystems (1) mit steigender Reaktortemperatur einen zunehmenden Volumenstrom des in dem Reaktor (3) umzusetzenden Edukts (CH₃OH) zuzuführen.

11. Vorrichtung nach Anspruch 10,
**dadurch gekennzeichnet, dass** zumindest einer der Mischbereiche (4,6) einen statischen Mischer (10) aufweist.

12. Vorrichtung nach Anspruch 10 oder 11,
**dadurch gekennzeichnet, dass** der Brenner (5) als Flammbrenner ausgestaltet ist.

13. Vorrichtung nach Anspruch 12,
**dadurch gekennzeichnet, dass** der Brenner (5) eine Zündeinrichtung (11) aufweist.

14. Vorrichtung nach Anspruch 10 oder 11,
**dadurch gekennzeichnet, dass** der Brenner (5) als katalytischer Brenner ausgebildet ist.

## Claims

1. Method for starting a reactor (3), in particular a reformer, in a gas generating system (1) of a fuel cell installation at a temperature, which is far below the operating temperature of the gas generating system (1), wherein a hydrocarbon is converted to generate thermal energy for heating the reactor, and wherein at least a portion of an exhaust gas stream of the converted hydrocarbon flows into the reactor (3),
**characterized in that** during the starting phase of the gas generation system (1), as the reactor temperature increases, an increasing volume flow of at least one educt (CH₃OH) intended to be converted in the reactor (3) is introduced and evaporated at least partly in the at least one portion of the exhaust gas stream, which flows into the reactor (3).

2. Method according to claim 1,
**characterized in that** the portion of the exhaust gas stream and the at least one educt (CH₃OH) are introduced into an autothermal reformer as at least a part of the reactor (3).

3. Method according to claim 1 or 2,
**characterized in that** the portion of the exhaust gas stream and the at least one educt are introduced into a partial oxidation stage as at least a part of the reactor (3).

4. Method according to claim 1, 2 or 3,
**characterized in that** the hydrocarbon (CH₃OH) is combusted at least partly in a flame burner (5).

5. Method according to one of claims 1 to 4,
**characterized in that** the hydrocarbon (CH₃OH) is converted at least partly in a catalytic reaction.

6. Method according to one of claims 1 to 5,
**characterized in that** the same hydrocarbon (CH₃OH) that is used during the conversion is used as at least a volume portion of the at least one educt (CH₃OH).

7. Method according to one of claims 1 to 6,
**characterized in that** water (H₂O) is used as at least a volume portion of the at least one educt.

8. Method according to one of claims 1 to 7,
**characterized in that** after reaching the operating temperature of the reactor (3) the combustion is carried out with a lambda value of the burner (5) which is larger than 1.

9. Method according to one of claims 1 to 8,
**characterized in that**, if the reactor (3) is sensitive to oxygen, the conversion is started with a lambda value of the burner (5) which is smaller than 1.

10. Apparatus for starting a reactor (3), in particular a reformer, in a gas generating system (1) of a fuel cell installation at a temperature, which is far below the operating temperature of the gas generating system (1), comprising at least one burner (5), which in the flow direction of its exhaust gases is disposed in front of the reactor (3), wherein in the flow direction ahead of the burner (5) a mixing region (4) for an oxygen containing gas and a fuel is disposed,
**characterized in that that** in the flow direction after the burner (5) and before the reactor (3) there is disposed at least one further mixing region (6) for the exhaust gases of the burner (5) and at least one educt (CH₃OH) intended to be converted in the reactor (3), wherein the burner (5) and the further mixing region (6) are integrated in a feed pipe (7) of the reactor (3), and wherein the gas generating system (1) comprises a device (9), which is adapted to supply to the further mixing region (6), during the starting phase of the gas generating system (1) and as the reactor temperature increases, an increasing volume flow of the educt (CH₃OH) intended to be converted in the reactor (3).

11. Apparatus according to claim 10,
**characterized in that** at least one of the mixing regions (4, 6) comprises a static mixer (10).

12. Apparatus according to claim 10 or 11,
**characterized in that** the burner (5) is designed as a flame burner.

13. Apparatus according to claim 12,
**characterized in that** the burner (5) comprises an ignition device (11).

14. Apparatus according to claim 10 or 11,
**characterized in that** the burner (5) is designed as a catalytic burner.

## Revendications

1. Procédé permettant le démarrage d'un réacteur (3), en particulier d'un reformeur, dans un système générateur de gaz (1) d'une pile à combustible à une température nettement inférieure à la température de service du système générateur de gaz (1), un hydrocarbure étant transformé pour produire l'énergie thermique destinée au chauffage du réacteur, et au moins une partie du flux gazeux d'échappement de l'hydrocarbure transformé affluant dans le réacteur (3),
**caractérisé en ce qu'**un flux volumique croissant provenant d'au moins un éduit (CH₃OH) à transformer dans le réacteur (3) est, pendant la phase de démarrage du système générateur de gaz (1) et la montée en température du réacteur, introduit dans au moins la partie du flux gazeux d'échappement qui afflue dans le réacteur (3), et évaporé pour le moins partiellement.

2. Procédé selon la revendication 1,
**caractérisé en ce que** la partie du flux gazeux d'échappement et au moins un éduit (CH₃OH) sont introduits dans un reformeur autotherme constituant pour le moins une partie du réacteur (3).

3. Procédé selon la revendication 1 ou 2,
**caractérisé en ce que** la partie du flux gazeux d'échappement et au moins un éduit sont introduits dans un étage d'oxydation partielle constituant pour le moins une partie du réacteur (3).

4. Procédé selon la revendication 1, 2 ou 3
**caractérisé en ce que** l'hydrocarbure (CH₃OH) est brûlé pour le moins partiellement dans un brûleur à flamme (5).

5. Procédé selon l'une des revendications 1 à 4,
**caractérisé en ce que** l'hydrocarbure (CH₃OH) est transformé pour le moins partiellement par réaction catalytique.

6. Procédé selon l'une des revendications 1 à 5,
**caractérisé en ce qu'**il est utilisé le même hydrocarbure (CH₃OH) que celui utilisé pendant la transformation comme fraction volumique d'au moins un éduit (CH₃OH).

7. Procédé selon l'une des revendications 1 à 6,
**caractérisé en ce qu'**il est utilisé de l'eau (H₂O) comme fraction volumique d'au moins un éduit.

8. Procédé selon l'une des revendications 1 à 7,
**caractérisé en ce que** la combustion s'opère à une valeur lambda du brûleur (5), laquelle est supérieure à 1, après que le réacteur (3) a atteint sa température de service.

9. Procédé selon l'une des revendications 1 à 8,
**caractérisé en ce que** la transformation se met en route à une valeur lambda du brûleur (5), laquelle est inférieure à 1, dans le cas d'un réacteur (3) sensible à l'oxygène.

10. Dispositif permettant le démarrage d'un réacteur (3), en particulier d'un reformeur, dans un système générateur de gaz (1) d'une pile à combustible à une température nettement inférieure à la température de service du système générateur de gaz (1), comprenant au moins un brûleur (5) disposé dans le sens d'écoulement de ses gaz d'échappement en amont du réacteur (3), une zone de mélange (4) pour un gaz contenant de l'oxygène et un combustible étant disposée dans le sens d'écoulement en amont du brûleur (5),
**caractérisé en ce qu'**au moins une zone de mélange supplémentaire (6) pour les gaz d'échappement du brûleur (5) et au moins un éduit (CH₃OH) à transformer dans le réacteur (3) est disposée dans le sens d'écoulement en aval du brûleur (5) et en amont du réacteur (3), le brûleur (5) et la zone de mélange supplémentaire (6) étant intégrés dans une conduite d'amenée (7) du réacteur (3), et le système générateur de gaz (1) comprenant un dispositif (9) équipé de manière à acheminer un flux volumique croissant provenant de l'éduit (CH₃OH) à transformer dans le réacteur (3) pendant la phase de démarrage du système générateur de gaz (1) et la montée en température du réacteur vers la zone de mélange supplémentaire (6).

11. Dispositif selon la revendication 10,
**caractérisé en ce qu'**au moins une des zones de mélange (4, 6) présente un mélangeur statique (10).

12. Dispositif selon la revendication 10 ou 11,
**caractérisé en ce que** le brûleur (5) est conçu en tant que brûleur à flamme.

13. Dispositif selon la revendication 12,
**caractérisé en ce que** le brûleur (5) présente un dispositif d'allumage (11).

14. Dispositif selon la revendication 10 ou 11,
**caractérisé en ce que** le brûleur (5) est conçu en tant que brûleur catalytique.
